# EUROPÄISCHE PATENTSCHRIFT

(11) **EP 3 758 193 B1**
(45) Veröffentlichungstag und Bekanntmachung des Hinweises auf die Patenterteilung: **26.10.2022**
(21) Anmeldenummer: 20173840.8
(22) Anmeldetag: 11.05.2020
(51) Int. Cl.: H02K 1/2746, H02K 9/22

(54) **ROTOR FÜR EINEN ELEKTROMOTOR**
ROTOR FOR AN ELECTRIC MOTOR
ROTOR POUR UN MOTEUR ÉLECTRIQUE

(30) Priorität: 27.06.2019 DE 102019117432
(43) Veröffentlichungstag der Anmeldung: 30.12.2020
(73) Patentinhaber: ebm-papst Landshut GmbH, 84030 Landshut (DE)
(72) Erfinder: KROTSCH, Jens, 97996 Niederstetten (DE); BAUN, Martin, 74673 Mulfingen (DE); HERTREITER, Martin, 84180 Loiching (DE); KLINK, Hans-Joachim, 84184 Tiefenbach (DE); KREUZER, Daniel, 84032 Altdorf (DE); SKOCIC, Ante, 80796 München (DE); FABER, Waldemar, 84036 Landshut (DE); RITTMAIER, Jochen, 74626 Bretzfeld (DE)
(74) Vertreter: Staeger & Sperling Partnerschaftsgesellschaft mbB

(56) Entgegenhaltungen:
- EP-A1- 3 334 012
- EP-A2- 2 908 407
- WO-A1-91/09443
- WO-A1-92/09132
- DE-A1-102012 020 895
- US-A1- 2011 057 523
- US-A1- 2013 162 090

## Beschreibung

Die Erfindung betrifft einen verbesserten Rotor für einen Elektromotor.

Die im Stand der Technik bekannten Rotoren weisen diverse Nachteile auf. So besteht regelmäßig ein Bedürfnis danach den Magnetmaterialanteil zu reduzieren ohne nachteilige Auswirkungen betreffend dem erforderlichen magnetischen Fluss zu haben.

Daneben kommt es immer wieder vor, dass Magnete (bei Permanentmagnetrotoren) brechen oder Risse bekommen und dann nicht mehr ihre Funktion erfüllen, da sie sich nicht mehr in ihrer bestimmungsgemäßen Position befinden.

Ein grundsätzlicher Bedarf besteht im Hinblick auf die Erleichterung der Magnetisierung und bei der Erhöhung der Variabilität des magnetischen Flussverlaufs.

Rotoren für einen Elektromotor, welche in Radialrichtung begrenzte Aufnahmeräume aufweisen, sind beispielsweise aus den Schriften EP 3 334 012 A1, WO 92/09132 A1 und WO 91/09443 A1 bekannt. Einzelne Merkmale werden zudem durch die Schriften US 2013/162090 A1 und US 2011/057523 A1 gelehrt.

Der Erfindung liegt deshalb die Aufgabe zugrunde, vorbesagte Aspekte zu verbessern und ein neuartiges Konstruktionskonzept für einen in den besagten Eigenschaften optimierten Rotor vorzuschlagen.

Diese Aufgabe wird durch die Merkmalskombination gemäß Anspruch 1 gelöst.

Erfindungsgemäß wird hierzu ein Rotor für einen Elektromotor (mit der Polpaarzahl p) gemäß Anspruch 1 vorgeschlagen. Ein solcher erfindungsgemäßer Rotor umfasst einen Trägerkörper in dem eine Rotorblechanordnung aus gestapelten Elektroblechen aufgenommen ist, welche aus jeweils einem im wesentlichen runden zentralen Ringabschnitt mit der Anzahl an p einstückig damit verbundenen flügelartigen Blechsegmenten gebildet sind (somit je Pol ein Blechsegment), wobei zwischen dem Trägerkörper und den jeweiligen Blechsegmenten der Rotorblechanordnung taschenartige Aufnahmetaschen zur Aufnahme von Magnetsegmenten (somit je Pol eine Aufnahme für ein Magnetsegment) ausgebildet sind. Die Aufnahmetaschen werden im Weiteren auch als Taschen oder Aufnahmeräume bezeichnet.

Die Rotorblechanordnung dient als Eisenrückschlusskörper, welcher vorzugsweise in einem Spritzgusswerkzeug mit Kunststoff teilumspritzt wird, so dass entsprechend geformte Aufnahmetaschen gebildet werden, in welche die Magnetsegmente und vorzugsweise auch die Rotorwelle gefügt werden können. Bei diesem Fertigungskonzeptkann auch gleichzeitig sehr kostengünstig eine Kühlflügelgeometrie inklusive einem Wuchtausgleich mit angespritzt werden. Die Kunststoffumspritzung dient hierbei als Fixierung der Magnetsegmente und der Rotorwelle.

Mit Vorteil ist dabei vorgesehen, dass für die Polpaarzahl p genau p taschenartige Aufnahmeräume ausgebildet sind, die in Umfangsrichtung gleichmäßig zwischen den jeweils p flügelartigen Blechsegmenten ausgebildet sind. Ein Polpaar setzt sich somit aus einem Elektroblechsegment und einem Magnetsegment (eingebracht in eine taschenförmige Aufnahme) zusammen.

In einer vorteilhaften Ausgestaltung der Erfindung ist vorgesehen, dass der Trägerkörper zwei teilzylindermantelförmige Haltesegmente ausbildet, deren Innenfläche (innere Mantelfläche) jeweils einen Aufnahmeraum für ein Magnetsegment je eines der p Polpaare begrenzt.

Weiter ist mit Vorteil vorgesehen, dass die teilzylindermantelförmigen Haltesegmente um die zentrale Achse des Rotors herum angeordnet sind und mit ihrem einen axialen Ende an einem zylinderförmigen Plattenteil des Trägerkörpers verbunden sind.

In einer weiteren vorteilhaften Ausgestaltung der Erfindung ist vorgesehen, dass der Trägerkörper ferner um seine zentrale Achse herum ein hohlzylinderförmiges Hülsenelement besitzt, welches eine Aufnahme für eine Rotorwelle ausbildet.

Ebenfalls von Vorteil ist eine Gestaltung, bei der der Trägerkörper jeweils in den Aufnahmeraum hineinragende elastisch und/oder plastisch verformbare Haltemittel ausbildet, gegen die ein vollständig in den Aufnahmeraum jeweils eingeführtes Magnetsegment kraftschlüssig anliegt. Als Toleranzausgleich bei der Fixierung werden entsprechende Rippenstrukturen oder Haltestrukturen eingebracht, um die bei der Herstellung von Dauermagneten üblichen Toleranzen auszugleichen. Die Magnetsegmente werden dabei in die vorgesehenen Tasche gefügt, wobei die Rippen zu einem Teil abgeschabt oder deformiert werden und/oder elastisch verformt werden.

Ein weiteres vorteilhaftes Konzept sieht vor, dass die genannten teilzylindermantelförmigen Haltesegmente jeweils zwei radial nach innen zur zentralen Achse des Rotors gerichtete Vorsprünge, Nasen oder Auskragungen aufweisen, von denen sich jeweils in den Aufnahmeraum hineinragende elastisch und/oder plastisch verformbare Haltemittel weg erstrecken.

Weiter vorteilhaft ist es, wenn die besagten Haltemittel als eine sich in Axialrichtung des Rotors erstreckende Rippenstruktur aus einer oder mehreren parallel verlaufenden Halterippen gebildet sind.

In einer besonders vorteilhaften Ausführung ist vorgesehen, dass jeder Pol (bestehend aus Magnetsegment und Elektroblechsegment und ggf. Zwischenräume) ein ganz bestimmtes Bogenmaß aufspannt. Hierzu wird vorgeschlagen, dass die jeweiligen Magnetsegmente eines der p Polpaare jeweils als ein Teilringabschnitt mit einem Bogenwinkel von α2 ausgebildet sind, wobei für α2 folgendes gilt: 0,4_{*}α1 ≤ α2 ≤ 0,7_{*}α1 und α1=360/p. Weiter ist vorgesehen, dass die jeweiligen flügelartigen Blechsegmente jeweils in Umfangsrichtung einen Teilringabschnitt mit einem Bogenwinkel von α3 ausbilden, wobei für α3 folgendes gilt: 0,25_{*}α1 ≤ α3 ≤ 0,5_{*}α1.

Es hat sich weiter als vorteilhaft erwiesen, wenn der Trägerkörper ferner eine Mehrzahl an Kühlflügel integral aufweist. Auf diese Weise kann dieser gleichzeitig zu seiner Fixier- und Positionierfunktion auch noch eine Kühlfunktion übernehmen.

Zur Optimierung der Positionierung und zum Abfangen von Zentripetalkräften der Magnetsegmenten, besitzen diese an ihren in Umfangsrichtung betrachteten Stirnseiten je eine Stufe oder Schulter, mit der sie jeweils gegen einen am Trägerkörper ausgebildeten Vorsprung anliegen.

Weiterhin ist zum Abfangen auftretender dynamischer Lasten und Kräfte ein Konzept vorgesehen, bei dem der Trägerkörper zumindest abschnittsweise, aus einer Rippenstruktur oder Fachwerkstruktur gebildet wird und zwar aus nebeneinander angeordneten Rippen oder Zähnen und jeweils paarweise dazwischen liegenden Ausnehmungen oder Hohlräumen. Mit Vorteil ist vorgesehen, dass die Rippenstruktur oder Fachwerkstruktur zumindest im Bereich der Vorsprünge und/oder dem zylindrischen Hülsenelement vorgesehen ist.

Durch das beschriebene Konzept ist es möglich durch den Trägerkörper auch gerissene Magnetsegmente in exakter Position zu fixieren und ein unerwünschtes Verschieben zu verhindern.

Ferner können Magnetsegmente vormagnetisiert und in diesem Zustand montiert werden, indem diese einfach in die Aufnahmetaschen eingeschoben werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine perspektivische Ansicht eines Ausführungsbeispiels eines Rotors,
- Fig. 2: eine Seitenansicht des Rotors aus Figur 1,
- Fig. 3: eine perspektivische Ansicht eines Trägerkörpers des Rotors aus Figur 1,
- Fig. 4: eine stirnseitige Ansicht auf den Trägerkörper aus Fig. 3,
- Fig. 5: eine stirnseitige Ansicht auf den Trägerkörper aus Fig. 3 mit eingefügten Magnetsegmenten,
- Fig. 6: das Detail B aus Figur 4,
- Fig. 7: das Detail C aus Figur 5,
- Fig. 8: drei Ausführungsbeispiele von Anordnungen mit unterschiedlichen Bogenmaßen der Magnetsegmente und Blechpaketsegmente bei einer Ausführung mit 4 Polen (p = 2),
- Fig. 9, 10: drei Ausführungsbeispiele von Anordnungen mit unterschiedlichen Bogenmaßen der Magnetsegmente und Blechpaketsegmente bei einer Ausführung mit 6 Polen (p = 3) und
- Fig. 11,12: zwei nicht erfindungsgmäße Beispiele e von Anordnungen mit unterschiedlichen Bogenmaßen der Magnetsegmente und Blechpaketsegmente bei einer Ausführung mit 6 Polen (p = 3) mit einer alternativen Magnetanordnung.

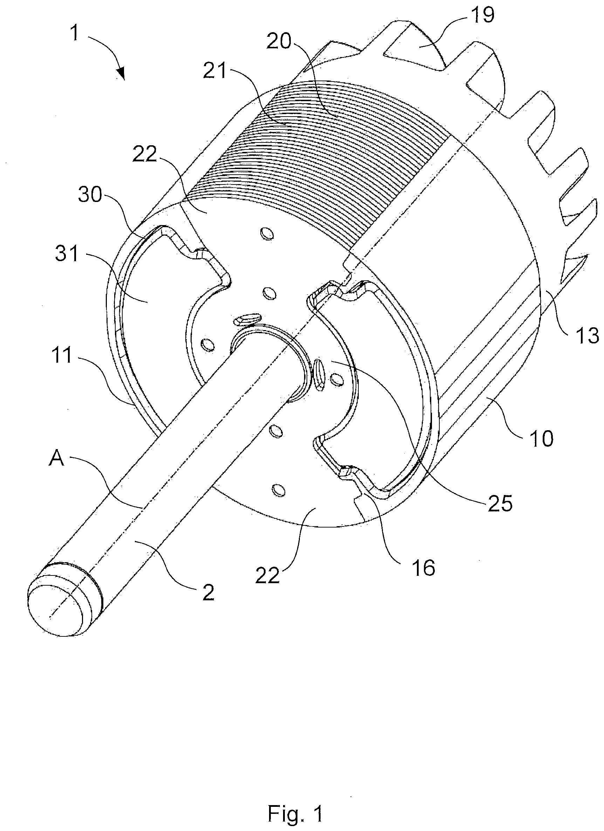

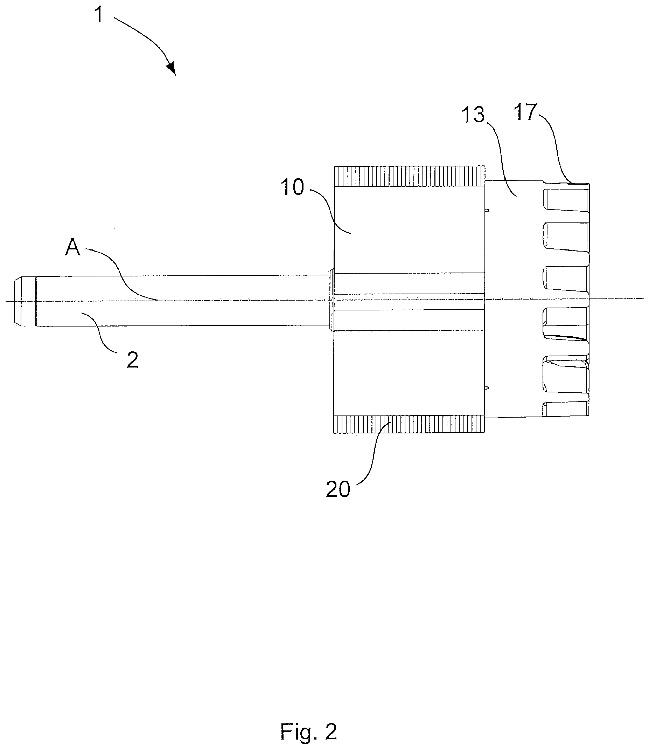

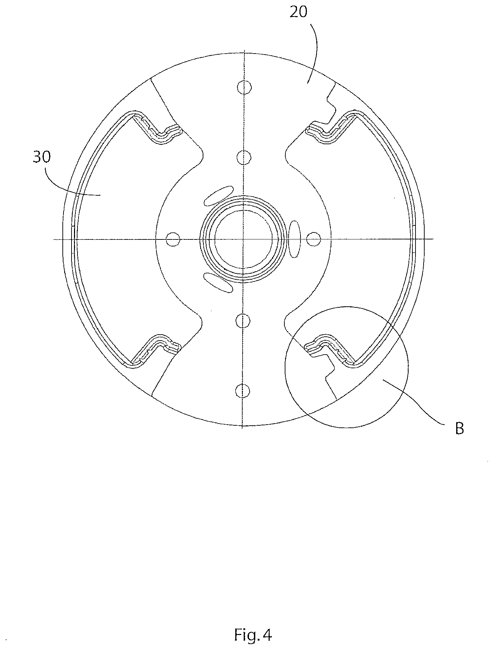

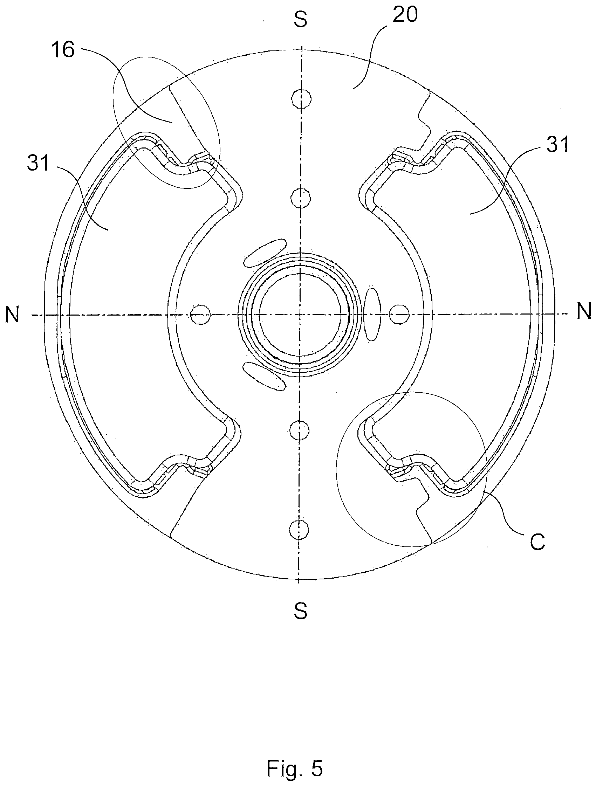

Im Folgenden wird die Erfindung mit Bezug auf die Figuren 1 bis 12 näher erläutert, wobei gleiche Bezugszeichen in den Figuren auf gleiche strukturelle und/oder funktionale Merkmale hinweisen.

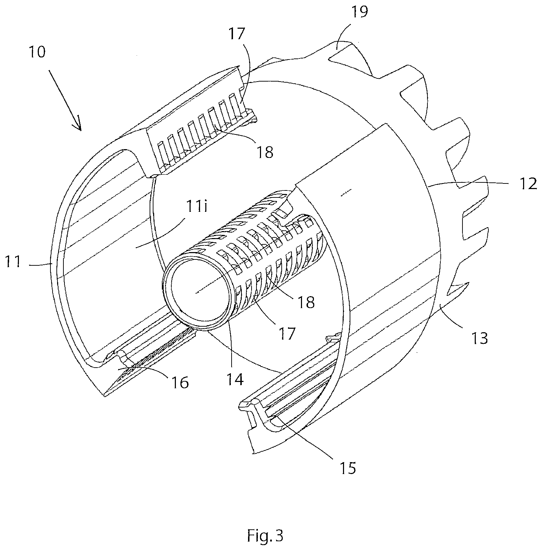

In den Figuren 1 bis 7 ist eine beispielhafte Ausführungsform eines erfindungsgemäßen Rotors 1 mit 2 Polpaaren gezeigt. Der Rotor 1 besitzt einen Trägerkörper 10, wie dieser in der perspektivischen Ansicht der Figur 3 dargestellt ist.

Ferner besitzt der Rotor 1 eine Rotorblechanordnung 20 aus gestapelten Elektroblechen 21, die in dem Trägerkörper 10 aufgenommen ist. Die Elektroblechen 21 bestehen aus jeweils einem im wesentlichen runden zentralen Ringabschnitt 25 mit zwei einstückig damit verbundenen flügelartigen Blechsegmenten 22, die sich radial nach außen zu diametral gegenüberliegenden Seiten hin erstrecken. Die beiden Blechsegmente 22 spannen dabei jeweils ein gleiches Bogenmaß α3 auf.

Zwischen dem Trägerkörper 10 und den jeweiligen Blechsegmenten 22 der Rotorblechanordnung 20 befinden sich taschenartige Aufnahmeräume 30 zur Aufnahme von Magnetsegmenten 31.

Wie in der Figur 3 gut ersichtlich, besitzt der Trägerkörper 10 zwei teilzylindermantelförmige Haltesegmente 11. Diese liegen sich bezogen auf eine durch die zentrale Achse A verlaufenden Mittelebene spiegelsymmetrisch gegenüber und besitzen hakenartige Vorsprünge 16, die sich nach radial Innen erstrecken.

Die Vorsprünge sind mit einer Rippenstruktur aus nebeneinander angeordneten Rippen 17 und dazwischen liegenden Hohlräumen 18 versehen. Eine vergleichbare Fachwerkstruktur besitzt das nachfolgend noch beschriebene Hülsenelement 14.

Die jeweilige Innenfläche 11i der beiden teilzylindermantelförmigen Haltesegmente 11 begrenzt den Aufnahmeraum 30 für das jeweilige Magnetsegment 31 und stellt demnach eine Anlagefläche zum Fixieren des jeweiligen Magnetsegments 31 dar.

Die teilzylindermantelförmigen Haltesegmente 11 sind um die zentrale Achse des Rotors herum angeordnet und mit ihrem einen axialen Ende 12 an einem zylinderförmigen Plattenteil 13 verbunden. An diesem Plattenteil 13 des Trägerkörpers 10 ist ferner um die zentrale Achse herum ein hohlzylinderförmiges Hülsenelement 14 vorgesehen, welches eine Aufnahme für eine Rotorwelle 2 ausbildet, die in der Figur 1 beispielhaft gezeigt ist. Das Hülsenelement 14 besitzt eine Rippenstruktur bestehend aus einer Vielzahl nebeneinander angeordneter Rippen 17 zwischen denen Aussparungen 18 vorgesehen sind.

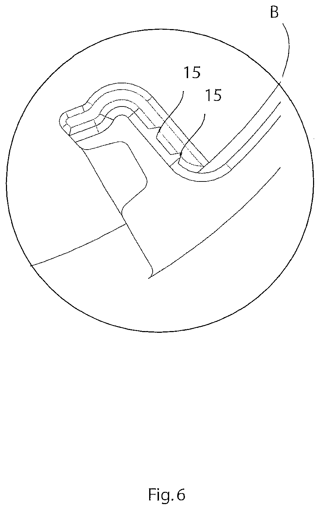

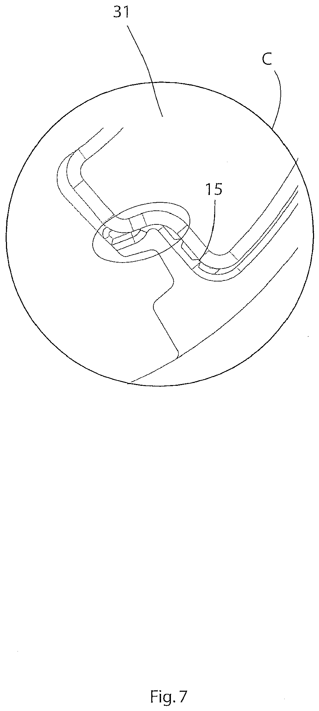

Mit Hilfe der Detailansichten der Figuren 6 und 7 lässt sich das Fixieren der toleranzbehafteten Magnetsegmente 31 erläutern. Der Trägerkörper 10 besitzt hierzu jeweils zwei in den Aufnahmeraum 30 hineinragende elastisch und plastisch verformbare Rippen 15 gegen die die Magnetsegmente 31 anliegen. Bei der Montage der Magnetsegmente 31 sind diese Rippen 15 elastisch verformt worden, so dass die Magnetsegmente 31 elastisch in ihrer Position fixiert sind.

Der Trägerkörper 10 besitzt ferner integral eine Mehrzahl an Kühlflügel 19, die von dem Plattenteil 13 wegstehen. An das Plattenteil 13 kann ferner ein Gewichtselement angespritzt werden, um dadurch mögliche Unwuchten zu beseitigen.

Die gewählte Form der Magnetsegmente 30 an ihren in Umfangsrichtung betrachteten Stirnseiten 33 ist gut in der Figur 7 zu erkennen. Hierzu ist je eine Stufe vorgesehen, mit der das Magnetsegment 30 jeweils gegen den am Trägerkörper ausgebildeten Vorsprung 16 anliegt.

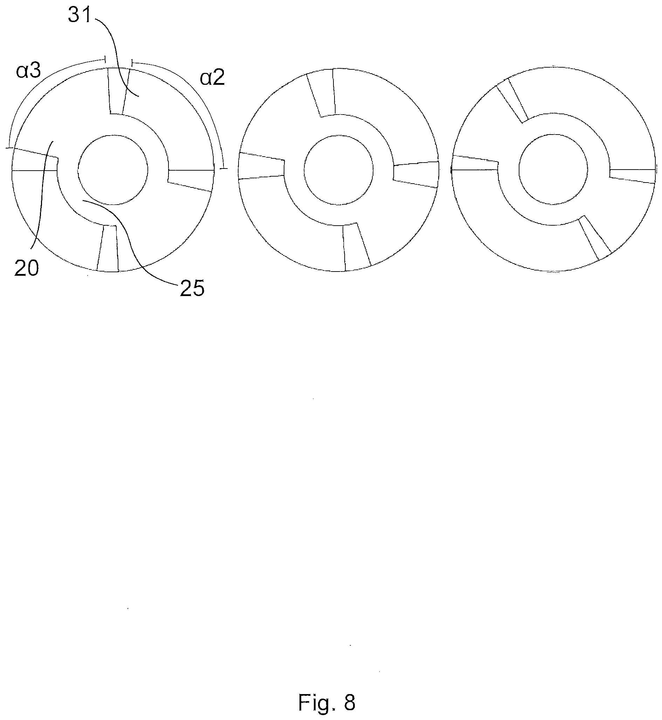

In der Figur 8 sind drei Ausführungsbeispiele von Anordnungen mit unterschiedlichen Bogenmaßen α2 der Magnetsegmente 31 und Bogenmaßen α3 der Blechpaketsegmente 22 gezeigt (siehe nachfolgende Tabelle 1). Das Bogenmaß wird dabei am äußeren radialen Rand gemessen. Das Bogenmaß α1 hat immer den Wert α1 = 360°/p.

**Tabelle 1**

| Ansicht der Figur 8 | Bogenmaß α2 | Bogenmaß α3 |
|---|---|---|
| 1. Ausführungsbeispiel Linke Ansicht | 0,45 × 180° | 0,41 × 180° |
| 2. Ausführungsbeispiel Mittlere Ansicht | 0,55 × 180° | 0,34 × 180° |
| 3. Ausführungsbeispiel Rechte Ansicht | 0,65 × 180° | 0,26 × 180° |

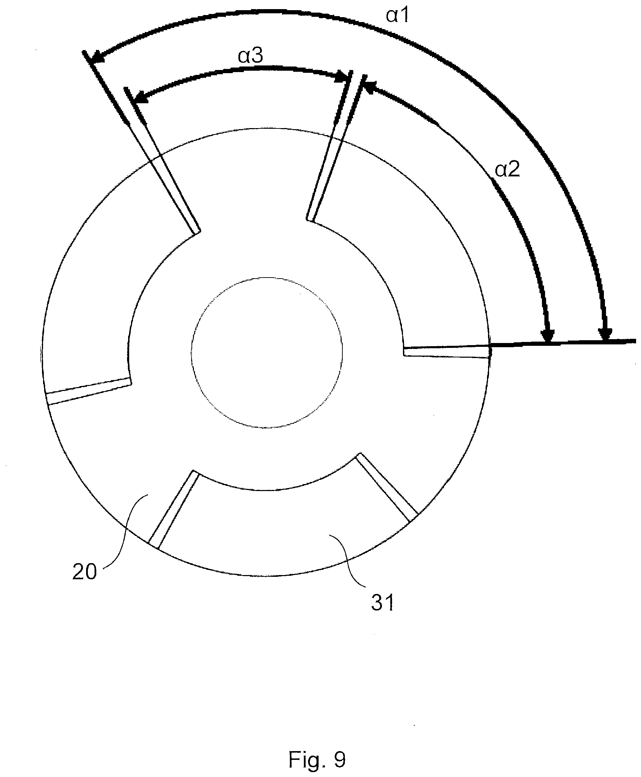

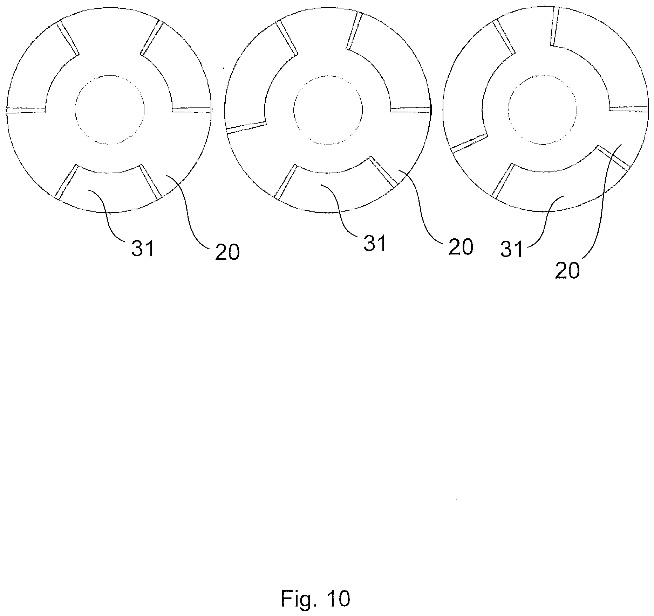

In den Figuren 9 und 10 sind drei weitere Ausführungsbeispiele von Anordnungen mit unterschiedlichen Bogenmaßen der Magnetsegmente 31 und Blechpaketsegmente 22 bei einer Ausführung mit 6 Polen (p = 3) gezeigt, wobei folgende Zusammenhänge bestehen (siehe Tabelle 2).

**Tabelle 2**

| Ansicht der Figur 10 | Bogenmaß α2 | Bogenmaß α3 |
|---|---|---|
| 1. Ausführungsbeispiel Linke Ansicht | 0,475 × 120° | 0,475 × 120° |
| 2. Ausführungsbeispiel Mittlere Ansicht | 0,575 × 120° | 0,375 × 120° |
| 3. Ausführungsbeispiel Rechte Ansicht | 0,675 × 120° | 0,275 × 120° |

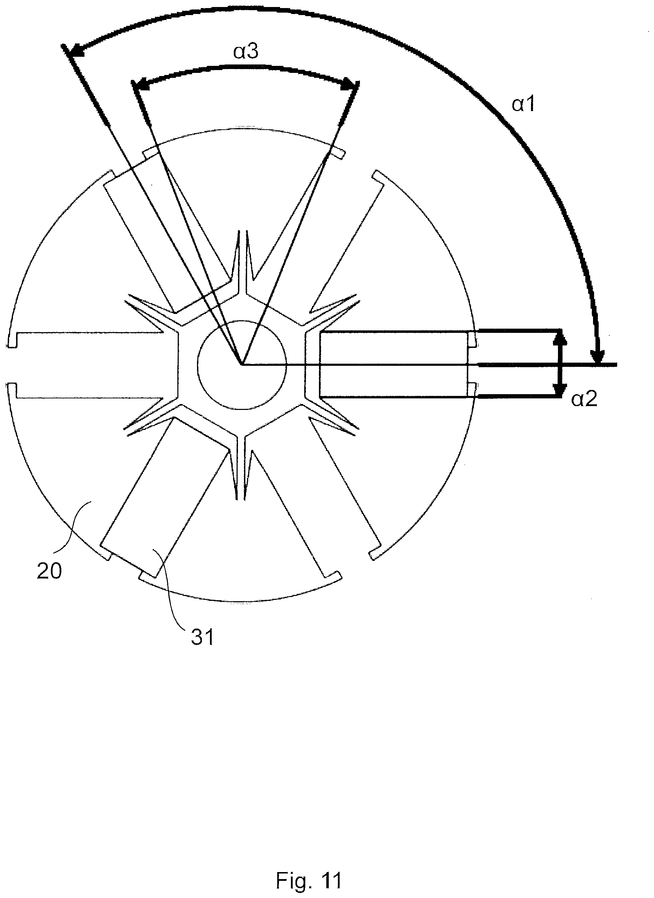

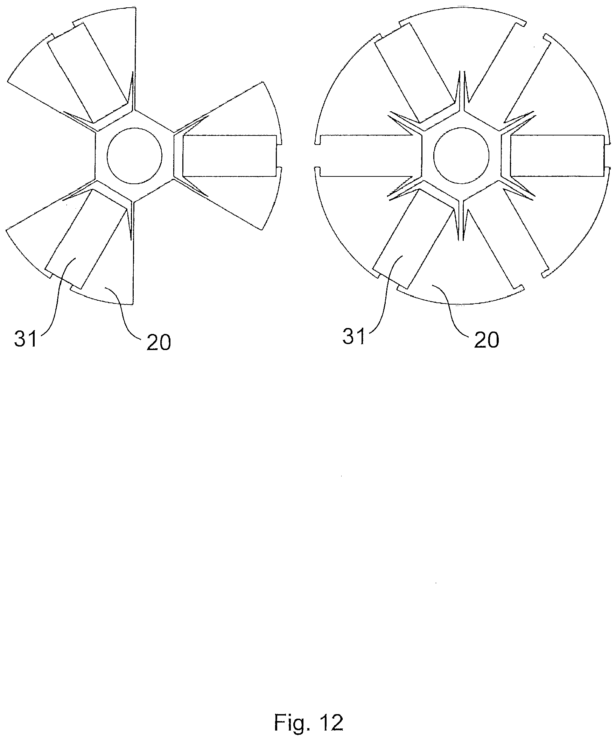

In den Figuren 11 und 12 sind zwei nicht erfindungsgemäße Beispiele von Anordnungen mit unterschiedlichen Breiten der Magnetsegmente 31 und Blechpaketsegmente 22 bei einer Ausführung mit 6 Polen (p = 3) gezeigt, wobei folgende Zusammenhänge bestehen (siehe Tabelle 3). Der Trägerkörper 10 ist dabei in den Figuren 11 und 12 nicht dargestellt.

**Tabelle 3**

| Ansicht der Figur 12 | Bogenmaß α3 |
|---|---|
| 1. Ausführungsbeispiel Linke Ansicht | 0,214 × 120° |
| 2. Ausführungsbeispiel rechte Ansicht | 0,364 × 120° |

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch . macht, entsprechend dem Umfang der Ansprüche.

## Patentansprüche

1. Rotor (1) für einen Elektromotor mit der Polpaarzahl p umfassend einen Trägerkörper (10) in dem eine Rotorblechanordnung (20) aus gestapelten Elektroblechen (21) aufgenommen ist, welche aus jeweils einem im Wesentlichen runden zentralen Ringabschnitt mit der Anzahl an p einstückig damit verbundenen flügelartigen Blechsegmenten (22) gebildet sind, welche jeweils einen Pol ausbilden, **dadurch gekennzeichnet, dass** zwischen dem Trägerkörper (10) und den jeweiligen Blechsegmenten (22) der Rotorblechanordnung (20) Aufnahmetaschen (30) zur Aufnahme von Magnetsegmenten (31) ausgebildet sind, welche durch den Trägerkörper (10) in Radialrichtung nach außen und in Axialrichtung einseitig begrenzt sind, so dass die Magnetsegmente (31) in die Auf nahmetaschen (30) eingeschoben werden können.

2. Rotor (1) nach Anspruch 1, **dadurch gekennzeichnet, dass** für die Polpaarzahl p genau p Aufnahmetaschen (30) ausgebildet sind, die in Umfangsrichtung gleichmäßig zwischen den jeweils p flügelartigen Blechsegmenten (22) ausgebildet sind.

3. Rotor (1) nach Anspruch 1, **dadurch gekennzeichnet, dass** der Trägerkörper (10) zwei teilzylindermantelförmige Haltesegmente (11) ausbildet, deren Innenfläche (11i) jeweils eine Aufnahmetasche (30) für ein Magnetsegment (31) je eines der p Polpaare begrenzt.

4. Rotor (1) nach einem der vorhergehenden Ansprüche 3, **dadurch gekennzeichnet, dass** die teilzylindermantelförmigen Haltesegmente (11) um die zentrale Achse (A) herum angeordnet sind und mit ihrem einen axialen Ende (12) an einem zylinderförmigen Plattenteil (13) verbunden sind.

5. Rotor (1) nach einem der vorhergehenden Ansprüche 1 bis 4, **dadurch gekennzeichnet, dass** der Trägerkörper (10) ferner um die zentrale Achse (A) herum ein hohlzylinderförmiges Hülsenelement (14) besitzt, welches eine Aufnahme für eine Rotorwelle (2) ausbildet.

6. Rotor (1) nach einem der vorhergehenden Ansprüche, **dadurch gekennzeichnet, dass** der Trägerkörper (10) jeweils in den Aufnahmetasche (30) hinein ragende elastisch und/oder plastisch verformbare Haltemittel (15) ausbildet, gegen die jeweils ein vollständig in die Aufnahmetasche (30) eingeführtes Magnetsegment (31) kraftschlüssig anliegt.

7. Rotor (1) nach einem der vorhergehenden Ansprüche 3 bis 6, **dadurch gekennzeichnet, dass** die teilzylindermantelförmigen Haltesegmente (11) jeweils zwei radial nach innen zur zentralen Achse (A) hin gerichtete Vorsprünge (16) aufweisen, von denen sich jeweils in die Aufnahmetasche (30) hineinragende elastisch und/oder plastisch verformbare Haltemittel (15) weg erstrecken.

8. Rotor (1) nach Anspruch 6 oder 7, **dadurch gekennzeichnet, dass** die Haltemittel (15) als eine sich in Axialrichtung des Rotors erstreckende Rippenstruktur aus einer oder mehreren parallel verlaufenden Halterippen gebildet sind.

9. Rotor (1) nach einem der vorhergehenden Ansprüche, **dadurch gekennzeichnet, dass** die jeweiligen Magnetsegmente (30) eines der p Polpaare jeweils als ein Teilringabschnitt mit einem Bogenwinkel von α2 ausgebildet sind, wobei 0,4_{*}α1 ≤ α2 ≤ 0,7_{*}α1 mit p=2 und α1=360/p.

10. Rotor (1) nach einem der vorhergehenden Ansprüche, **dadurch gekennzeichnet, dass** die jeweiligen flügelartigen Blechsegmente (22) jeweils in Umfangsrichtung einen Teilringabschnitt mit einem Bogenwinkel von α3 ausbilden, wobei 0,25_{*}α1 ≤ α3 ≤ 0,5_{*}α1, wobei p=2 und α1=360/p.

11. Rotor (1) nach einem der vorhergehenden Ansprüche, **dadurch gekennzeichnet, dass** der Trägerkörper (10) eine Mehrzahl an Kühlflügeln (19) integral aufweist.

12. Rotor (1) nach einem der vorhergehenden Ansprüche, **dadurch gekennzeichnet, dass** die Magnetsegmente (30) an ihren in Umfangsrichtung betrachteten Stirnseiten (33) je eine Stufe oder Schulter aufweisen, mit der sie jeweils gegen einen am Trägerkörper (10) ausgebildeten Vorsprung (16) anliegen.

13. Rotor (1) nach einem der vorhergehenden Ansprüche, **dadurch gekennzeichnet, dass** der Trägerkörper (10) zumindest abschnittsweise, aus einer Rippenstruktur oder Fachwerkstruktur gebildet ist, welche aus nebeneinander angeordneten Rippen (17) oder Zähnen und dazwischenliegenden Ausnehmungen oder Hohlräumen (18) besteht.

14. Rotor (1) nach Anspruch 5, 7 und 13, **dadurch gekennzeichnet, dass** zumindest die Vorsprünge (16) und/oder das zylindrische Hülsenelement (14) abschnittsweise durch die Rippenstruktur oder Fachwerkstruktur gebildet werden/wird.

## Claims

1. A rotor (1) for an electric motor with the pole pair number p, comprising a carrier body (10) in which a rotor sheet arrangement (20) made of stacked electrical sheets (21) is accommodated, each consisting of a substantially round central ring section with the number p of blade-like sheet metal segments (22) integrally connected thereto, which each form a pole, **characterized in that** receiving pockets (30) for receiving magnet segments (31) are formed between the carrier body (10) and the respective sheet metal segments (22) of the rotor sheet arrangement (20), which are delimited on one side by the carrier body (10) in a radial direction outwards and in an axial direction, such that the magnet segments (31) can be inserted into the receiving pockets (30).

2. The rotor (1) according to claim 1, **characterized in that** exactly p receiving pockets (30) are formed for the pole pair number p, which pockets are formed uniformly in the circumferential direction between the respective p blade-like sheet metal segments (22).

3. The rotor (1) according to claim 1, **characterized in that** the carrier body (10) forms two holding segments (11) in the form of partial cylinder jackets, the inner surface (11i) of which in each case delimits a receiving pocket (30) for a magnet segment (31) for one of the p pole pairs.

4. The rotor (1) according to any one of the preceding claims 3, **characterized in that** the holding segments (11) in the form of partial cylinder jackets are arranged about the central axis (A) and connected at one axial end (12) to a cylindrical plate part (13).

5. The rotor (1) according to any one of the preceding claims 1 to 4, **characterized in that** the carrier body (10) also has a hollow-cylindrical sleeve element (14) extending about the central axis (A), which sleeve element forms a receptacle for a rotor shaft (2).

6. The rotor (1) according to any one of the preceding claims, **characterized in that** the carrier body (10) in each case forms elastically and/or plastically deformable holding means (15) protruding into the receiving pocket (30), against which holding means a magnet segment (31) inserted completely into the receiving pocket (30) abuts in a non-positive manner.

7. The rotor (1) according to any one of the preceding claims 3 to 6, **characterized in that** the holding segments (11) in the form of partial cylinder jackets each have two projections (16) directed radially inward towards the central axis (A), wherein elastically and/or plastically deformable holding means (15) protruding into the receiving pocket (30) extend away from each of said projections.

8. The rotor (1) according to claim 6 or 7, **characterized in that** the holding means (15) are formed as a rib structure of one or more parallel holding ribs extending in an axial direction of the rotor.

9. The rotor (1) according to any one of the preceding claims, **characterized in that** the respective magnet segments (30) of one of the p pole pairs are each formed as a partial ring section with an arc angle of α2, where 0.4 ∗ *α*1 ≤ *α*2 ≤ 0.7 ∗ *α*1 with p=2 and α1=360/p.

10. The rotor (1) according to any one of the preceding claims, **characterized in that** the respective blade-like sheet metal segments (22) each form a partial ring section with an arc angle of α3 in the circumferential direction, where 0.25 ∗ *α*1 ≤ *α*3 ≤ 0.5 ∗ *α*1, where p=2 and α1=360/p.

11. The rotor (1) according to any one of the preceding claims, **characterized in that** the carrier body (10) integrally has a plurality of cooling blades (19).

12. The rotor (1) according to any one of the preceding claims, **characterized in that** the magnet segments (30) each have a step or shoulder on their end faces (33) viewed in the circumferential direction, with which they each rest against a projection (16) formed on the carrier body (10).

13. The rotor (1) according to any one of the preceding claims, **characterized in that** the support body (10) is formed at least in sections from a rib structure or framework structure which consists of ribs (17) or teeth arranged next to one another and recesses or cavities (18) located therebetween.

14. The rotor (1) according to claims 5, 7 and 13, **characterized in that** at least the projections (16) and/or the cylindrical sleeve element (14) is/are formed in sections by the rib structure or framework structure.

## Revendications

1. Rotor (1) pour un moteur électrique avec le nombre de paires de pôles p, comprenant un corps de support (10) dans lequel est logé un agencement de tôles de rotor (20) constitué de tôles électriques empilées (21), qui sont formées chacune d'une section annulaire centrale sensiblement ronde avec le nombre p de segments de tôle en forme d'ailes (22) reliés d'un seul tenant à celle-ci, et qui forment chacun un pôle, **caractérisé en ce que** des poches de réception (30) pour recevoir des segments d'aimant (31) sont formées entre le corps de support (10) et les segments de tôle respectifs (22) de l'agencement de tôle de rotor (20), qui sont délimités d'un côté par le corps de support (10) dans la direction radiale vers l'extérieur et dans la direction axiale, de sorte que les segments d'aimant (31) peuvent être poussés dans les poches de réception (30).

2. Rotor (1) selon la revendication 1, **caractérisé en ce qu'**exactement p poches de réception (30) sont formées pour le nombre de paires de pôles p, qui sont formées uniformément dans la direction circonférentielle entre les p segments de tôle en forme d'aile respectifs (22).

3. Rotor (1) selon la revendication 1, **caractérisé en ce que** le corps de support (10) forme deux segments de maintien (11) en forme d'enveloppes en partie cylindriques dont la surface intérieure (11i) délimite à chaque fois une poche de réception (30) pour un segment d'aimant (31) pour l'une des p paires de pôles.

4. Rotor (1) selon l'une des revendications précédentes 3, **caractérisé en ce que** les segments de maintien (11) en forme d'enveloppes en partie cylindrique sont disposés autour de l'axe central (A) et sont reliés à son extrémité axiale (12) au niveau d'une partie de plaque cylindrique (13).

5. Rotor (1) selon l'une des revendications précédentes 1 à 4, **caractérisé en ce que** le corps de support (10) comporte également un élément de manchon cylindrique creux (14) autour de l'axe central (A), qui forme un logement pour un arbre de rotor (2).

6. Rotor (1) selon l'une des revendications précédentes, **caractérisé en ce que** le corps de support (10) forme dans chaque cas des moyens de maintien (15) élastiquement et/ou plastiquement déformables faisant saillie dans la poche de réception (30), et contre lesquels un segment d'aimant (31) inséré complètement dans la poche de réception (30) s'appuie par adhérence.

7. Rotor (1) selon l'une des revendications précédentes 3 à 6, **caractérisé en ce que** les segments de maintien (11) en forme d'enveloppes en partie cylindrique présentent chacun deux saillies (16) dirigées radialement vers l'intérieur vers l'axe central (A), à partir desquels s'écartent les moyens de maintien (15) élastiquement et/ou plastiquement déformables faisant saillie dans la poche de réception (30).

8. Rotor (1) selon la revendication 6 ou 7, **caractérisé en ce que** les moyens de maintien (15) sont réalisés sous la forme d'une structure nervurée s'étendant dans la direction axiale du rotor à partir d'une ou plusieurs nervures de maintien parallèles.

9. Rotor (1) selon l'une des revendications précédentes, **caractérisé en ce que** les segments d'aimant respectifs (30) de l'une des p paires de pôles sont chacun formés sous la forme d'une section en partie annulaire avec un angle d'arc de a2, où 0,4 * *α*1 ≤ *α*2 ≤ 0,7 ∗ *α*1 avec p=2 et α1=360/p.

10. Rotor (1) selon l'une des revendications précédentes, **caractérisé en ce que** les segments de tôle en forme d'ailes respectifs (22) forment chacun une section en partie annulaire avec un angle d'arc de α3 dans la direction circonférentielle, où 0,25 ∗ *α*1 ≤ *α*3 ≤ 0,5 ∗ *α*1, où p=2 et α1=360/p.

11. Rotor (1) selon l'une des revendications précédentes, **caractérisé en ce que** le corps de support (10) présente une pluralité d'aubes de refroidissement (19) solidaires.

12. Rotor (1) selon l'une des revendications précédentes, **caractérisé en ce que** les segments d'aimant (30) présentent chacun un décrochement ou un épaulement sur leurs faces frontales (33) vues dans le sens circonférentiel, avec lequel ils s'appuient chacun contre une saillie (16) formée sur le corps de support (10).

13. Rotor (1) selon l'une des revendications précédentes, **caractérisé en ce que** le corps de support (10) est formé, au moins par sections, d'une structure nervurée ou structure en treillis qui se compose de nervures (17) ou de dents disposées les unes à côté des autres et d'évidements ou de cavités (18) situées entre elles.

14. Rotor (1) selon les revendications 5, 7 et 13, **caractérisé en ce qu'**au moins les saillies (16) et/ou l'élément de manchon cylindrique (14) est (sont) formé(s) par sections par la structure nervurée ou la structure en treillis.
